# EUROPÄISCHE PATENTSCHRIFT

(11) **EP 2 744 075 B1**
(45) Veröffentlichungstag und Bekanntmachung des Hinweises auf die Patenterteilung: **28.03.2018**
(21) Anmeldenummer: 12196486.0
(22) Anmeldetag: 11.12.2012
(51) Int. Cl.: H02K 9/06, H02K 1/20, H02K 1/32, H02K 9/08

(54) **Elektrisch rotierende Maschine**
Electrically rotating machine
Machine à rotation électrique

(43) Veröffentlichungstag der Anmeldung: 18.06.2014
(73) Patentinhaber: Siemens Aktiengesellschaft, 80333 München (DE)
(72) Erfinder: Noack, Felix, 90427 Nürnberg (DE); Spera, Zdenek, 90537 Feucht (DE); Stuckmann, Christoph, 92353 Postbauer-Heng (DE); Weiß, Sebastian, 90522 Oberasbach (DE)

(56) Entgegenhaltungen:
- CH-A- 461 617
- DE-A1-102008 033 959
- US-A- 3 110 827
- US-A1- 2005 151 430

## Beschreibung

Die Erfindung betrifft elektrisch rotierende Maschine gemäß des Oberbegriff des Anspruchs 1.

Elektromotoren oder Generatoren zur Erzeugung von elektrischem Strom besitzen von Strom durchflossene Wicklungen. Diese verlaufen in einem Rotor und/oder einem Stator. Der Rotor und/oder der Stator besteht, falls Wicklungen in diesen verlaufen, im wesentlichen aus einem Blechpaket. Blechpakete sind aus aufeinandergestapelten, meist durch einen Stanzprozess erzeugten, Blechen zusammengesetzt. Die Bleche werden durch einen Befestigungsmechanismus, beispielsweise eine Schraubverbindung, fest zusammengehalten. Die Strom durchflossene Wicklungen erwärmen sich während des Betriebs der elektrisch rotierenden Maschine und geben einen großen Teil ihrer Wärme an das Blechpaket ab. Daher besteht die Notwendigkeit, diese Blechpakete zu kühlen. Zur Kühlung des Blechpaketes kann Luft durch Kühlwege im Blechpaket strömen, um die überschüssige Wärme aufzunehmen. Oft verläuft der Luftstrom durch Kühlwege im Rotor, welche in Kühlwege im Stator münden. Nach dem Durchlauf durch die Kühlwege des Stators wird der Luftstrom zumeist an die Umwelt abgegeben. Diese Kühlwege beginnen in Rotor und leiten den Luftstrom durch einen Luftspalt zwischen Rotoraußenseite und Statorinnenseite in die anschließenden Kühlwege nach außen. Falls der Spalt an den Stirnseiten des Rotors und/oder des Stators nicht verengt ist, entweicht durch diesen Luftspalt zwischen dem Rotor und dem Stator ein nicht unerheblicher Teil des Luftstroms, bevor es in die Kühlwege des Stators gelangt. Die DE 10 2008 033 959 A1 offenbart einen Generator mit einem Läuferblechpaket, das sowohl radial als auch axial verlaufende Kühlkanäle aufweist, wobei der radiale Kühlluftstrom den Luftspalt überqueren muss.

Die US 3,110,827 offenbart einen Generator, der ebenfalls über eine Anzahl Kühlkanäle verfügt, wobei der radiale Kühlluftstrom ebenfalls den Luftspalt überqueren muss. Dabei ist der Luftspalt durch Ringe in mehrere umlaufende Zonen unterteilt, um einen axialen Kühlluftstrom durch den Luftspalt weitgehend zu verhindern.

Aus der schweizerischen Patentschrift Nr. 461617 ist ebenfalls bekannt, dass der Spalt zwischen einem Rotor und einem Stator einer elektrisch rotierenden Maschine mittels Ringen verengt werden kann, um das seitliche Ausströmen eines Kühlgases durch den axial verlaufenden Luftspalt zu unterbinden.

Der Erfindung liegt die Aufgabe zugrunde, die Kühlung einer elektrisch rotierenden Maschine zu verbessern.

Diese Aufgabe wird durch die Merkmale des unabhängigen Anspruchs 1 gelöst, wobei eine elektrisch rotierenden Maschine der eingangs genannten Art mindestens eine Verengung des Luftspalts aufweist, welche durch eine Vergrößerung der Außenradien von Blechen des Blechpakets des Rotors und/oder durch eine Verringerung des Innenradius von Blechen des Blechpakets des Stators gebildet ist.

Ein Luftstrom, der durch die Kühlwege durch den Rotor und über den Luftspalt durch den Stator verläuft, ist vermindert durch einen Verlust, die beim Übergang der Kühlwege vom Rotor zum Stator auftritt. Dabei entweicht ein kleiner Teil der Luft durch den Luftspalt und tritt in axialer Richtung zwischen dem Rotor und dem Stator aus dem Luftspalt aus. Eine erfindungsgemäße Verengung des Luftspaltes, beispielsweise nahe den Außenseiten des Luftspaltes, bewirkt ein vermindertes Austreten des Luftstroms an den Außenseiten und trägt somit zu einer Verbesserung der Kühlung des Stators bei. Der Anteil des Luftstromes, welcher durch den Luftspalt entweicht, trägt nur noch in einem verminderten Maße zur Kühlung des Stators bei. Eine ausreichende Kühlung der einzelnen Bauteile ist für den ungestörten Betrieb und für einen hohen Wirkungsgrad der Maschine notwendig. Für eine weitere Verbesserung der Kühlung ist es vorteilhaft an der Vorderseite und an der Rückseite jeweils einen Lüfter anzubringen. So kann entweder einer Unterstützung des Luftstroms durch den weiteren Lüfter auf der anderen Seite des Rotors erfolgen, falls beide Lüfter einen parallelen und gleichgerichteten Luftstrom erzeugen. Je nach Konstruktionsweise können auch zwei parallele Luftströme vorteilhaft sein, die in entgegen gesetzter Richtung verlaufen. Die in unterschiedlicher Richtung verlaufenden Luftströme führen gegebenenfalls dazu, dass vermehrt die radial verlaufenden Kühlwege durchströmt werden, welche im mittleren Bereich des Rotors und des Stators lokalisiert sind. Eine variable Strömungsgeschwindigkeit von einem der Luftströme lässt sich dieser Bereich gezielt einstellen. Da der radiale Abstand zwischen dem Rotor und dem Stator (gleich der Höhe des Luftspaltes) bei elektrisch rotierenden Maschinen, insbesondere bei Elektromotoren oder Generatoren, sehr gering im Vergleich zu den übrigen Ausmaßen des Blechpaketes oder der Blechpakete selbst ist, ist die prozentuale Änderung der, für die Verengung veränderten, Radien im niedrigen einstelligen Bereich. Eine derart geringe Veränderung der Radien von Blechen bewirkt nur eine geringe Änderung des magnetischen Feldes. Ein wesentlicher Vorteil einer Verengung des Luftspaltes durch die Veränderung der Radien einiger Bleche besteht in der vereinfachten Fertigung des Blechpaketes, da im Vergleich zum derzeitigen Stand der Technik keine zusätzlichen Elemente an dem Blechpaket befestigt werden müssen. Darüber hinaus weist ein solches Blechpaket eine erhöhte Stabilität gegenüber einem Blechpaket mit einem zusätzlichen Element, beispielsweise eines Ringes, auf.

Bei einer vorteilhaften Ausgestaltung der elektrisch rotierenden Maschine sind Verengung des Luftspaltes jeweils nahe den Außenseiten des Rotors beziehungsweise des Stators vorgesehen. Eine Verengung nahe den Außenseiten des Blechpaketes oder der Blechpakete bewirkt zumeist eine ausreichende Verminderung des unvorteilhaften Austritts des Luftstroms durch den Luftspalt in ausreichender Weise. Da sich der Luftstrom im Bereich zwischen den beiden Verengungen frei beweglich ist, wird ein Wärmestau in einzelnen Bereichen des Stators oder des Rotors verhindert. Zudem breitet sich die Luft durch den inneren Bereich des Luftstroms nahezu ungehindert aus. Dies führt zu einer gleichmäßigen Kühlung des Rotors sowie des Stators in axialer Richtung. So wird ein gegebenenfalls vorliegendes Ungleichgewicht in der Verteilung des Luftstroms auf die einzelnen Kühlwege teilweise ausgeglichen. Die Lokalisierung der Verengung an den Außenseiten des Luftspaltes zwischen Rotor und Stator erzeugt nur eine geringe Änderung des Fertigungsprozesses, da nur eine geringe Anzahl von Blechen modifiziert werden müssen. Falls eine Modifikation des Herstellungsprozesses schwierig ist, können die Bleche mit Radien, welche von den Radien des Bleche des unmodifizierten Blechpaketes abweichen, separat hergestellt werden und nachträglich in das Blechpaket integriert werden.

Bei einer weiteren vorteilhaften Ausgestaltungsform ist die Verengung des derart verteilt ist, dass der Luftspalt jeweils in radial zur Rotorachse verlaufenden Bereichen verengt sind, zwischen denen die Kühlwege den Luftspalt kreuzen. Bei dieser Form werden sowohl im Randbereich, als auch dazwischen, Verengungen des Luftspaltes durch eine Veränderung der entsprechenden Radien der entsprechenden Bleche des Bleckpaketes erzeugt. Die Verengungen sind beispielsweise dergestalt angeordnet, dass jeweils einzelne Kühlwege von zwei Verengungen vom restlichen Luftspalt teilweise separiert werden. Diese Verengungen, die vorteilhaft in unmittelbarer Nähe des Kühlweges befinden, führen zu einer besseren Überleitung des Luftstromes vom Rotor zum Stator hin. Da diese Ausgestaltungsform mehrere Verengungen aufweist und jede der Verengungen eine Hinderung des Luftstroms durch den Luftspalt darstellt, ist hier die Effizienz der Durchleitung des Luftstroms vom Rotor zum Stator noch weiter optimiert. Die gezielte Überleitung des Luftstroms vom Rotor zum Stator sorgt für eine verbesserte Entwärmung des Stators, insbesondere in radialer Richtung im vergleich zu einer Überleitung durch einen Luftspalt, der keine Verengungen zwischen den einzelnen Übergängen der Kühlwege durch den Luftspalt aufweist.

Bei einer weiteren vorteilhaften Ausgestaltung ergibt sich die Verengung des Luftspaltes teilweise aus einer bereichsweise vorliegenden Veränderung der Radien der Bleche der Blechpakete von Rotor und/oder Stator und durch Fixieren von mindestens einem Ring oder ein flexibles Band in diesem Bereich, wobei der Ring oder das flexible Band am Stator und/ oder am Rotor fixiert ist. Falls die elektrisch rotierende Maschine in ihrem Einsatz der Einwirkung von äußeren Kräften oder einem Kraftstoß ausgesetzt ist, besteht die Möglichkeit, dass der Rotor seine Drehachse gegenüber dem Stator gegebenenfalls kurzzeitig verändert. Diese Veränderung kann insbesondere im Bereich der Verengung des Luftspaltes zu einer Berührung von Stator und Rotor im laufenden Betrieb und damit zu einem Materialabrieb führen. Im Falle von metallischen Oberflächen, welche in diesem Fall aneinander reiben, geht von metallischen Partikeln in der elektrisch rotierenden Maschine ein erhebliches Gefährdungspotential für die elektrisch rotierende Maschine aus. Eine Blockierung des Rotors oder ein Kurzschluss können die Folge von metallischen Partikeln in der elektrisch rotierenden Maschine sein. Um dieses Gefahrenpotential zu minimieren sollte mindestens ein dünner Ring im Bereich eines verengten Luftspaltes den Abrieb von metallischen Partikeln unterbinden. Der Ring ist hierbei am besten aus einem organischen Werkstoff, wie beispielsweise einem Kunststoff zu fertigen. Alternativ kann auch eine Umwicklung mit einem flexiblen Band anstelle eines massiven Ringes erfolgen. Dieses Band kann auch eine textile Struktur aufweisen. Durch zusätzliche Ringe können zudem Unebenheiten der Außenflächen des Rotors und/oder des Stators ausgeglichen werden. Bei einer tatsächlichen Berührung der so präparierten Innenflächen des Luftspalts erweisen sich die Reibungskoeffizienten zwischen Kunststoffen in der Regel geringer als Reibungskoeffizienten zwischen metallischen Oberflächen. Diese geringeren Reibungskoeffizienten führen zu einer verminderten Neigung einer Blockierung des Rotors bei einer kurzzeitigen Veränderung der Rotationsachse des Rotors. Zusätzlich kann der Ring oder das flexible Band dazu dienen, eventuell auftretende Ungenauigkeiten der Oberflächengüte oder der Radien der Blechpakete, insbesondere in den Bereichen der Verengung, auszugleichen.

Im folgenden wird die Erfindung anhand der in den Figuren dargestellten Ausführungsbeispiele näher beschrieben und erläutert.

### Es zeigen:

- FIG 1: einen Ausschnitt einer elektrisch rotierenden Maschine mit seitlich verengtem Luftspalt,
- FIG 2: einen Ausschnitt einer elektrisch rotierenden Maschine mit mehreren Verengungen des Luftspaltes,
- FIG 3: ein weiteres Ausführungsbeispiel für die Verengung eines Luftspaltes, sowie
- FIG 4: einen Ausschnitt einer elektrisch rotierenden Maschine mit zwei Lüftern.

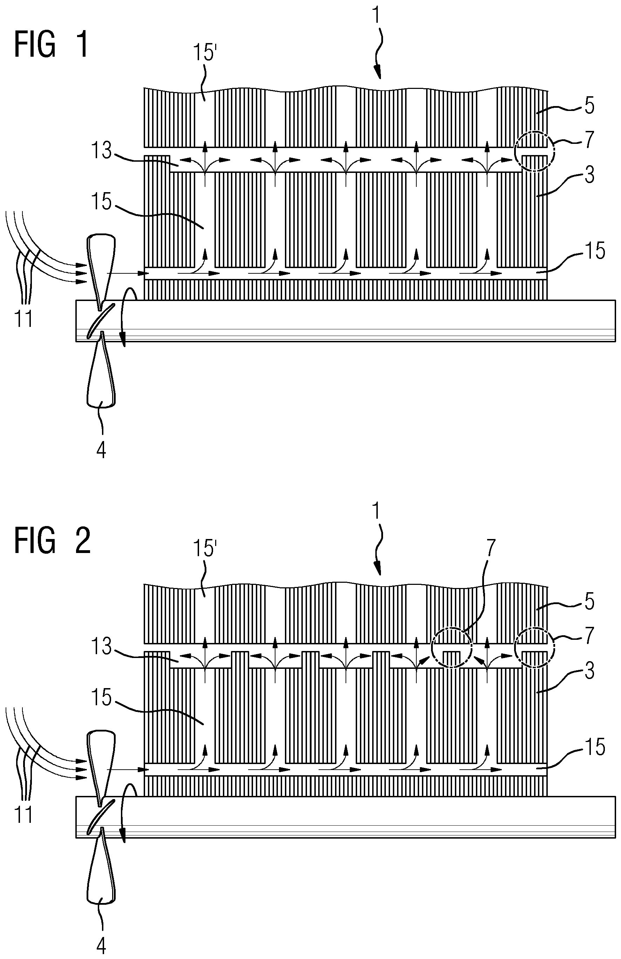

FIG 1 zeigt einen Ausschnitt einer elektrisch rotierenden Maschine 1 mit seitlich angeordneten Verengungen 7 des Luftspalts 13. Diese FIG zeigt den Rotor, bestehend aus dem Blechpaket 3, der einen axial verlaufenden Kühlweg 15 und fünf radial verlaufende Kühlwege 15 aufweist. Zusätzlich befindet sich auf einer Seite ein Lüfter 4, der mit der Rotationsachse verbunden ist. Darüber angeordnet befindet sich ausschnittweise das Blechpaket 5 des Stators, welches ebenfalls mit Kühlwegen 15' versehen ist. Die Kühlwege 15 des Rotors und die Kühlwege 15' des Stators sind übereinander angeordnet und durchkreuzen den Luftspalt 13, der zwischen dem Blechpaket 3 des Rotors und dem Blechpaket 5 des Stators angeordnet ist. Die Kühlwege 15, 15' durchkreuzen hierbei in orthogonaler Richtung den Luftspalt 13. Es ist jedoch auch denkbar, dass ein spitzer Winkel und/oder ein stumpfer Winkel zwischen den Luftspalt 13 und den Kühlwegen 15, 15' vorliegt. Der Luftstrom 11 wird durch den Lüfter 4, nahe der Rotationsachse erzeugt. In dieser Figur wird der Luftstrom 11 durch Pfeile symbolisiert. Der Luftstrom 11 wird durch den Lüfter 4 erzeugt und verläuft durch den radialen Teil des Kühlweges 15 in die einzelnen axial verlaufenden Kühlwege 15 des Rotors. Der Luftstrom 11 im Kühlweg 15 des Rotors durchkreuzt nachfolgend den Luftspalt 13 zwischen dem Blechpaket 3 des Rotors und dem Blechpaket 5 des Stators und mündet in den darüber liegenden Kühlwegen 15' des Stators. Der Luftstrom 11 gelangt so durch die Kühlwege 15 des Stators nach außen und trägt so zur Kühlung des Blechpakets 3 des Rotors und insbesondere zur Kühlung des Blechpakets 5 des Stators bei. Seitlich angeordnet ist eine Verengung 7 des Kühlspalts 13 sichtbar. Die Verengung 7 wird durch eine Erhöhung der Radien der Bleche erzeugt, die sich in den Randbereichen des Blechpakets 3 des Rotors befinden. Es ist auch möglich, die Radien der Bleche des Blechpakets 3 des Rotors nicht zu verändern und dafür die Innenradien der entsprechenden Bleche des Blechpakets 5 des Stators zu verringern, so dass auch hier in diesem Fall im Randbereich des Luftspalts 13 eine Verengung 7 auftritt. Der Vorteil an dieser Konstruktion im Vergleich zum Stand der Technik besteht in der hohen Stabilität des Blechpaketes 3 des Rotors, da keine Befestigungen zusätzlicher Elemente zur Erzeugung einer Verengung 7 notwendig sind. Durch die Verengung 7 wird der Luftstrom 11 weitgehend im Luftspalt 13 erhalten und kann so mit einer höheren Effizienz vom Kühlweg 15 des Rotors in den Kühlweg 15' des Stators geleitet werden. Hierbei ist der Strömungswiderstand der Verengung 7 das entscheidende Merkmal. Da sich der Strömungswiderstand im Bereich einer Verengung 7 stark vergrößert, bewirkt schon eine kleine Verengung 7 des Luftspalts 13 eine große Wirkung. Diese Verengung 7 führt zu einer höheren Effizienz der Durchleitung des Luftstroms vom Blechpaket 3 des Rotors in das Blechpaket 5 des Stators und trägt so zu einer verbesserten Kühlung Blechpaketes 5 des Stators bei. Zusätzlich können auch weitere Lüfter 4' am Rotor befestigt sein und für einen weiteren Luftstrom 11' in den axial verlaufenden Teil des Kühlweges 15 und weiter in die radial verlaufenden Kühlwege 15, 15' sorgen.

FIG 2 zeigt einen Ausschnitt einer elektrisch rotierenden Maschine 1 mit mehreren Verengungen 7 des Luftspalts 13. Bei dieser Ausführungsform ist jeweils zwischen zwei Kühlwegen 15, 15', die den Luftspalt 13 kreuzen, eine Verengung 7 am Blechpaket 3 des Rotors vorliegend. Diese Verengungen 7 werden durch Bleche erzeugt, deren Radien im Vergleich zu den anderen Blechen vergrößert sind. Auch in dieser Ausführungsform durchläuft der Luftstrom die Kühlwege 15 des Rotors und mündet in die Kühlwege 15' des Stators ein. Hierbei ist zusätzlich der Luftstrom 11 auf den eingeschränkten Bereich des Luftspalts zwischen den naheliegenden Verengungen 7 lokalisiert und tritt im erhöhten Maße in den Kühlweg 15' des Stators ein. Je nach Wärmeverteilung können die innen liegenden Verengungen 7 des Luftspaltes 13 in der Erhöhung der entsprechenden Radien sowie in der Position angepasst werden. Auch in diesem Fall ist es möglich, die Verengungen 7 durch die Verminderung der Innenradien einzelner Bleche des Blechpakets 5 des Stators zu erzeugen. Der Vorteil dieser Ausgestaltung liegt in der noch besseren Überleitung des Luftstroms 11 von den Kühlwegen 15 des Rotors in die Kühlwege 15' des Stators im Vergleich zu dem in FIG 1 beschriebenen Ausführungsbeispiel. Es ist auch möglich, auf einzelne Verengungen 7 zwischen den Kühlwegen zu verzichten, falls dieses bezüglich des vorliegenden Magnetfeldes in einem der Blechpakete 3, 5 Vorteile birgt. Zusätzlich können in einer vorteilsbehafteten Ausgestaltung die Verengungen 7 zwischen den einzelnen Kühlwegen 15, 15' nicht zu eng zu wählen um gegebenenfalls eine Kühlwirkung des Luftstroms 11 im Innenbereich des Luftspalt nicht gänzlich zu unterbinden. Demgegenüber sind die äußeren Verengungen 7 des Luftspaltes 13 im üblichen Maße auszugestalten, um das Entweichen des Luftstroms 11, 11' an den Seiten zu verhindern.

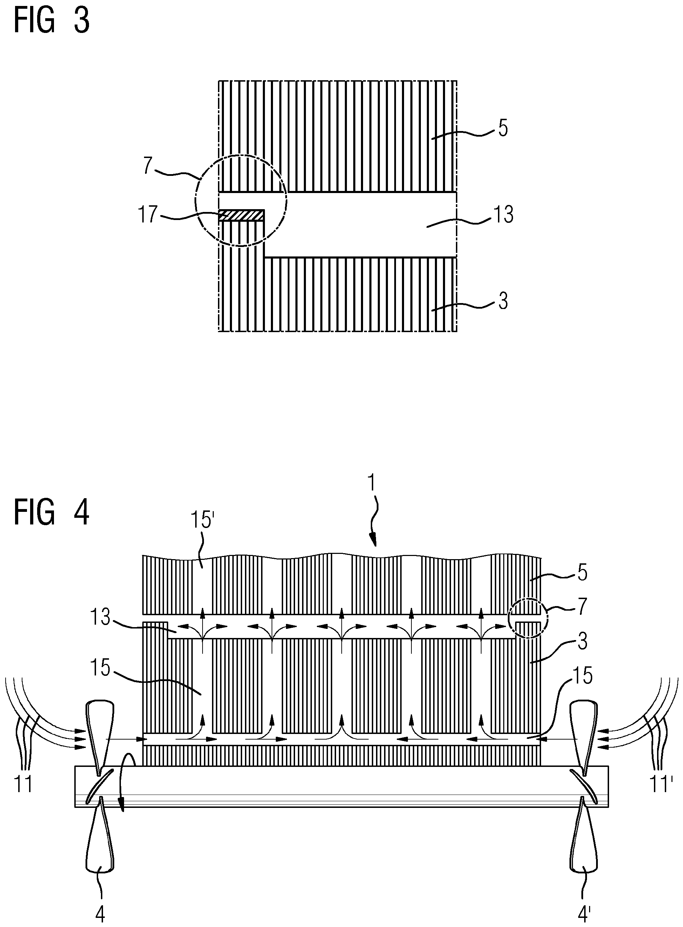

FIG 3 zeigt eine weitere Möglichkeit für die Verengung 7 des Luftspalts 13 zwischen den Blechpaketen 3, 5. Dabei sind jeweils das Blechpaket 3 des Rotors und das Blechpaket 5 des Stators übereinander liegend gezeichnet. Die Schraffierung der Blechpakete 3, 5 soll die Ausrichtung der einzelnen Bleche der Blechpakete 3, 5 symbolisieren. Dabei besteht die Verengung 7 des Luftspaltes 13 zum Teil aus einer bereichsweise vorliegenden Erhöhung der Radien einiger Bleche eines Blechpaketes 3, 5 und zum anderen aus einem Ring 17. Diese Verengung 7 ist auf der einen Seite als Ausschnitt gezeichnet, so dass den beiden Möglichkeiten Rechnung getragen wird, dass die Verengung 7 an einem der Ränder der Blechpakete 3, 5 oder in einem Bereich in der Mitte des Luftspaltes 13 lokalisiert ist. Der Ring 17 kann hier entweder aus einem massiven Feststoff (wie zum Beispiel einem Kunststoff oder Aluminium) oder einem flexiblen Band bestehen. Im Falle eines flexiblen Bandes ist eine Klebeverbindung vorteilhaft. Im Falle eines massiven Ringes 17 ist beispielsweise eine kraftschlüssige Verbindung oder eine Klebeverbindung besonders geeignet. Die Ausführung mit einem flexiblen Band ist für die meisten Anwendungen vorzuziehen, da hier der Grad der Verengung 7 in einfacher Weise an die gegebenenfalls auftretenden Toleranzen angepasst werden kann. Zudem kann so eine besonders dünner Ring 7 realisiert werden. Das Aufbringen eines dünnen flexiblen Bandes kann auch als Beschichtung des Blechpaketes 3, 5 ausgestaltet sein und sich gegebenenfalls auf einen größeren Bereich erstrecken, als der, welcher durch die Verengung 7 vorgegeben ist.

FIG 4 zeigt einen Ausschnitt einer elektrisch rotierenden Maschine 1 mit zwei Lüftern 4, 4'. Diese Figur ist bis auf einen weiteren Lüfter 4' und einen dadurch veränderten Luftstrom 11, 11' gleich der FIG 1. In dieser Figur verlaufen der der Luftströme 11, 11' in entgegengesetzt verlaufenden Richtungen. Dieses Zusammenspiel beider Luftströme 11, 11' in dem axial verlaufenden Teil des Kühlwegs 15 bedingt eine höhere Luftströmung in denjenigen Kühlwegen 15, 15', die mittig im den Blechpaketen 3, 5 lokalisiert sind. Diese verstärkte Luftstrom 11, 11' ist durch den längeren Pfeil in mittleren Kühlweg 15, 15' symbolisiert. Falls die Lüfter 4, 4' unterschiedlich dimensioniert sind, lässt sich der Luftstrom 11, 11' gut in die Kühlwege 15, 15' lenken, welche Bereiche durchlaufen, die intensiver gekühlt werden müssen.

Zusammenfassend betrifft die Erfindung eine elektrisch rotierende Maschine 1 aufweisend mindestens ein Blechpaket 3, 5 und mindestens einen Lüfter 4, 4' zum Leiten eines Luftstroms 11, 11' durch axial verlaufende Kühlwege 15 in einem Rotor der elektrisch rotierenden Maschine 1 entlang zu radial durch das Blechpaket 3 des Rotors und das Blechpaket 5 des Stators verlaufenden Kühlwegen 15, 15'. Dabei sind die Kühlwege 15, 15' durch einen, zwischen Rotor und Stator befindlichen, Luftspalt 13 unterbrochen. Um die Verminderung des Luftstromes 11, 11' durch den Luftspalt 13 zu vermindern, wird der Luftspalt 13 an mindestens einer Stelle mit einer Verengung 7 versehen. So ist eine gezielte Überleitung des Luftstroms 11, 11' zwischen den Kühlwegen 15, 15' durch den Luftspalt 13 gewährleistet. Die Verengung 7 entsteht durch eine Vergrößerung der Außenradien von Blechen des Blechpakets 3 des Rotors und/oder durch eine Verringerung des Innenradius von Blechen des Blechpakets 5 des Stators. Zusätzlich kann die Verengung mit einem Ring 17 oder einem flexiblen Band zusätzlich verengt sein.

## Patentansprüche

1. Elektrisch rotierende Maschine (1) aufweisend mindestens ein Blechpaket (3, 5) und mindestens einen Lüfter (4) zum Leiten eines Luftstroms (11, 11') durch axial verlaufende Kühlwege (15) in einem Rotor der elektrisch rotierenden Maschine (1) entlang zu radial durch den Rotor und einen Stator verlaufenden Kühlwegen (15, 15'), wobei die Kühlwege (15, 15') durch einen, zwischen Rotor und Stator befindlichen, Luftspalt (13) unterbrochen sind, **dadurch gekennzeichnet, dass** die elektrisch rotierende Maschine (1) mindestens eine Verengung (7) des Luftspaltes (13) aufweist, welche durch eine Vergrößerung der Außenradien von Blechen des Blechpakets (3) des Rotors oder durch eine Verringerung des Innenradius von Blechen des Blechpakets (5) des Stators gebildet ist.

2. Elektrisch rotierende Maschine (1) nach Anspruch 1, wobei die Verengung (7) des Luftspaltes (13) jeweils nahe den Außenseiten des Rotors beziehungsweise des Stators vorgesehen ist.

3. Elektrisch rotierende Maschine (1) nach Anspruch 1 oder 2, wobei die Verengung (7) derart ausgebildet ist, dass der Luftspalt (13) in radial zur Rotorachse verlaufenden Bereichen Verengungen (7) des Luftspalts (13) aufweist, zwischen denen die Kühlwege (15, 15') den Luftspalt (13) kreuzen.

4. Elektrisch rotierende Maschine (1) nach einem der vorangehenden Ansprüche, wobei sich die Verengung (7) des Luftspaltes (13) teilweise aus einer bereichsweise vorliegenden Veränderung der Radien der Bleche der Blechpakete (3, 5) von Rotor und/oder Stator und durch mindestens einem Ring (17) oder ein flexibles Band in diesem Bereich ergibt, wobei der Ring (17) oder das Band am Stator oder am Rotor fixiert ist.

5. Elektrisch rotierende Maschine nach einem der vorangehenden Ansprüche, wobei die elektrisch rotierende Maschine als Elektromotor oder als Generator ausgebildet ist.

## Claims

1. Electrically rotating machine (1) having at least one laminated core (3, 5) and at least one fan (4) for conducting an air flow (11, 11') through
cooling paths (15) running axially in a rotor of the electrically rotating machine (1) to cooling paths (15, 15') running radially through the rotor and a stator, wherein the cooling paths (15, 15') are interrupted by an air gap (13) disposed between the rotor and the stator, **characterised in that** the electrically rotating machine (1) has at least one constriction (7) of the air gap (13), which is formed by an enlargement of the outer radii of sheets of the laminated core (3) of the rotor and/or by a reduction of the inner radius of sheets of the laminated core (5) of the stator.

2. Electrically rotating machine (1) according to claim 1, wherein the constriction (7) of the air gap (13) is provided in each instance close to the outer sides of the rotor or of the stator respectively.

3. Electrically rotating machine (1) according to claim 1 or 2, wherein the constriction (7) is embodied such that the air gap (13) has constrictions (7) of the air gap (13) in regions which run radially in respect of the rotor axis, between which constrictions the cooling paths (15, 15') cross the air gap (13).

4. Electrically rotating machine (1) according to one of the preceding claims, wherein the restriction (7) in the air gap (13) is produced in part from a change, region by region, in the radii of the sheets of the laminated core (3, 5) of the rotor and/or stator and by at least one ring (17) or flexible band in this region, wherein the ring (17) or the band is fixed to the stator and/or to the rotor.

5. Electrically rotating machine according to one of the preceding claims, wherein the electrically rotating machine is embodied as an electric motor or as a generator.

## Revendications

1. Machine (1) tournant électriquement, comportant au moins un paquet (3, 5) de tôles et au moins un ventilateur (4) d'envoi d'un courant (11, 11') d'air par des voies (15) de refroidissement s'étendant axialement dans un rotor de la machine (1) tournant électriquement le long de voies (15, 15') de refroidissement s'étendant radialement dans le rotor et dans un stator, les voies (15, 15') de refroidissement étant interrompues par des entrefers (13) se trouvant entre le rotor et le stator, **caractérisée en ce que** la machine (1) tournant électriquement a au moins un rétrécissement (7) de l'entrefer (13), qui est formé par un agrandissement des rayons extérieurs de tôles du paquet (3) de tôles du rotor ou par une diminution du rayon intérieur de tôles du paquet (5) de tôles du stator.

2. Machine (1) tournant électriquement suivant la revendication 1, dans laquelle le rétrécissement (7) de l'entrefer (13) est prévu respectivement près des côtés extérieurs du rotor ou du stator.

3. Machine (1) tournant électriquement suivant la revendication 1 ou 2, dans laquelle le rétrécissement (7) est constitué de manière à ce que l'entrefer (13) ait, dans des parties s'étendant radialement par rapport à l'axe du rotor, des rétrécissements (7) de l'entrefer (13), entre lesquels les voies (15, 15') de refroidissement croisent l'entrefer (13).

4. Machine (1) tournant électriquement suivant l'une des revendications précédentes, dans laquelle le rétrécissement (7) de l'entrefer (13) est obtenu en partie à partir d'une modification présente par endroits des rayons des tôles du paquet (3, 5) de tôles du rotor et/ou du stator et par au moins une bague (17) ou une bande souple dans cette partie, la bague (17) ou la bande étant immobilisée sur le stator ou sur le rotor.

5. Machine (1) tournant électriquement suivant l'une des revendications précédentes, dans laquelle la machine tournant électriquement est constituée en moteur électrique ou en génératrice.
